# EUROPÄISCHE PATENTANMELDUNG

(11) **EP 3 838 853 A1**
(43) Veröffentlichungstag der Anmeldung: **23.06.2021**
(21) Anmeldenummer: 19216633.8
(22) Anmeldetag: 16.12.2019
(51) Int. Cl.: C03B 23/025, C03B 25/08, C03B 29/08, C03B 35/14, C03B 35/20

(54) **VERFAHREN ZUM ERWÄRMEN KLEINFLÄCHIGER GLASSCHEIBEN**

(71) Anmelder: SAINT-GOBAIN GLASS FRANCE, 92400 Courbevoie (FR)
(72) Erfinder: KUSTER, Hans-Werner, 52066 AACHEN (DE); LINNHÖFER, Dieter, 60280 Margny les Compiègne (FR); ZEICHNER, Achim, 52134 Herzogenrath (DE)
(74) Vertreter: Schönen, Iris

(57) **Zusammenfassung**

Verfahren zum Erwärmen kleinflächiger Glasscheiben in einem Durchlaufofen mit mehreren Tragplatten mindestens umfassend die Schritte
a) Auflegen einer Lage kleinflächiger Glasscheiben auf eine Tragplatte, wobei mindestens 6 Glasscheiben pro Tragplatte aufgelegt werden,
b) Einfahren der Tragplatte mit Glasscheiben in einen Durchlaufofen, wobei die Tragplatte und die Glasscheiben den Ofen gemeinsam durchfahren,
c) Erwärmen der Glasscheiben auf ihre Biege- und/oder Vorspanntemperatur,
d) Abnehmen der Glasscheiben von der Tragplatte und Auflegen der Glasscheiben auf einen Vorspannrahmen,
e) Ausfahren des Vorspannrahmens mit Glasscheiben aus dem Durchlaufofen und
f) Abkühlen der Glasscheiben.

## Beschreibung

Die vorliegende Erfindung liegt auf dem technischen Gebiet der Bearbeitung von Glasscheiben und betrifft ein Verfahren zum Erwärmen von Glasscheiben, das auch zur Bearbeitung kleinflächiger Glasscheiben geeignet ist.

Der Transport von Glasscheiben erfolgt in den in der industriellen Serienfertigung üblichen Rollen-Durchlauföfen mit Hilfe von Rollenbetten. Ein solches Rollenbett umfasst eine Vielzahl stationärer Transportrollen, die parallel in einer Ebene angeordnet sind und mit ihren jeweils nach oben weisenden Rollenabschnitten gemeinsam eine ebene Auflagefläche für die Glasscheiben bilden. Im heißen Endbereich des Ofens, in dem die Glasscheiben bereits ihre Biegetemperatur angenommen haben, können die Rollen geringfügige Beschädigungen der Scheiben hervorrufen, beispielsweise in Form von Deformationen, die als optische Störungen im Endprodukt sichtbar sind.

Darüber hinaus ist hinsichtlich des Transports der Glasscheiben auch deren Größe entscheidend. Im Automobilbereich werden neben den üblichen großflächigen Verglasungen auch sehr kleinteilige Gläser gefertigt, die beispielsweise neben den als A-Säule und C-Säule bezeichneten Karosserieabschnitten eingesetzt werden. Diese im Praxisgebrauch auch als *Front-Quarters, Rear-Quarters* oder *Mini-Lites* bezeichneten Gläser sind aufgrund ihrer geringen Größe bei einem Transport über Rollen kaum in einer konstanten Position zu halten. Dadurch wird ein automatisches Aufnehmen der Gläser wesentlich erschwert.

Die Aufgabe der vorliegenden Erfindung besteht darin, ein Verfahren zum Erwärmen von Glasscheiben bereitzustellen, das auch für kleinflächige Glasscheiben geeignet ist, unerwünschte Beschädigungen der Glasscheiben vermindert und eine stabile räumliche Positionierung ermöglicht. Diese und weitere Aufgaben werden nach dem Vorschlag der Erfindung durch ein Verfahren zum Erwärmen von Glasscheiben mit den Merkmalen des unabhängigen Patentanspruchs gelöst. Vorteilhafte Ausgestaltungen ergeben sich aus den Unteransprüchen.

Das erfindungsgemäße Verfahren zum Erwärmen kleinflächiger Glasscheiben in einem Durchlaufofen mit mehreren Tragplatten umfasst mindestens die Schritte
a) Auflegen einer Lage kleinflächiger Glasscheiben auf eine Tragplatte, wobei mindestens 6 Glasscheiben pro Tragplatte aufgelegt werden,
b) Einfahren der Tragplatte mit Glasscheiben in einen Durchlaufofen, wobei die Tragplatte und die Glasscheiben den Ofen gemeinsam durchfahren,
c) Erwärmen der Glasscheiben auf ihre Biege- und/oder Vorspanntemperatur,
d) Abnehmen der Glasscheiben von der Tragplatte und Auflegen der Glasscheiben auf einen Vorspannrahmen,
e) Ausfahren des Vorspannrahmens mit Glasscheiben aus dem Durchlaufofen und
f) Abkühlen der Glasscheiben.

Das erfindungsgemäße Verfahren ermöglicht durch die Verwendung von Tragplatten einen gleichzeitigen Transport mehrerer kleinflächiger Scheiben, wodurch die Taktzeit der Anlage pro Glas im Vergleich zu einem Glas pro Tragplatte erhöht wird. Durch Verwendung von Tragplatten werden die Glasscheiben ferner in einer definierten Position gehalten und im Vergleich zu einem Rollendurchlaufofen vor unerwünschten Transportbeschädigungen geschützt. Darüber hinaus können dank der genau definierten Position der Scheiben mit diesem Verfahren auch Glasscheiben unterschiedlicher Größen und Formen gemeinsam auf einer Tragplatte verarbeitet werden. Eine solche gemeinsame Verarbeitung verschiedener Formate kann auch hinsichtlich einer möglichst hohen Flächenbelegung der Tragplatte vorteilhaft sein.

Die Glasscheiben werden mittels eines Transportsystems innerhalb des Ofens durch diesen hindurch befördert. Das Transportsystem weist dabei eine Reihe von Tragplatten auf, auf denen die Glasscheiben aufgelegt werden.

Als kleinflächige Scheiben im Sinne der Erfindung werden Scheiben mit einer Fläche von kleiner als 0,05 m², bevorzugt kleiner als 0,04 m², bezeichnet. Diese sind auf den bekannten rollenbasierten Durchlauföfen nicht oder nur unzureichend zu verarbeiten, da sie ihre Position beim Transport stark verändern und nicht mehr automatisiert aufnehmbar sind.

Auf dem Gebiet der Kraftfahrzeugverglasung werden die Abmaße einer Scheibe anhand deren Einbaulage im Fahrzeug beschrieben, wobei die angegebenen Werte für Breite und Länge sich an den Koordinatenachsen des Fahrzeugs ausrichten. Das erfindungsgemäße Verfahren ist insbesondere zur Verarbeitung kleinflächiger Glasscheiben als Fahrzeugverglasung geeignet, wobei die Scheiben in Einbaulage im Fahrzeug eine Breite von höchstens 300 mm, bevorzugt höchstens 250 mm und/oder eine Höhe von höchstens 200 mm, bevorzugt höchstens 150 mm, aufweisen.

Ein weiterer entscheidender Einflussfaktor ob eine Glasscheibe über gängige Transportrollen verarbeitet werden kann ist die Ausdehnung der Scheibe entlang des Hauptbiegeradius. Der Transport der Glasscheiben erfolgt in der Regel in der Richtung parallel zum Hauptbiegeradius der Scheibe. Ist die Ausdehnung des Glases in Richtung des Hauptradius kleiner als 250 mm, so kann der sichere und reproduzierbare Transport über Rollen und durch eine Rollenbiegemaschine kritisch. Das erfindungsgemäße Verfahren schafft hier Abhilfe.

Im ersten Schritt des erfindungsgemäßen Verfahrens werden die Glasscheiben auf die Tragplatte aufgelegt, wobei jede Tragplatte mit mindestens 6, bevorzugt 8 bis 12, insbesondere 9 Glasscheiben belegt wird. Diese Anzahl von Glasscheiben ist vorteilhaft hinsichtlich einer möglichst großen Anzahl gleichzeitig im Prozess befindlicher Scheiben und einer damit einhergehenden Verkürzung der Taktzeit des Produktionsprozesses pro Glasscheibe.

Die Gesamtfläche der Glasscheiben auf einer Tragplatte beträgt zumindest 40 %, bevorzugt mindestens 50 %, insbesondere mindestens 70%, der Gesamtfläche der diese Glasscheiben aufnehmenden Tragplatte. Dadurch kann eine hohe Belegungsdichte und damit einhergehend hohe Taktzeit pro Glasscheibe und eine Wirtschaftlichkeit erreicht werden.

Die Tragplatten des Durchlaufofens stellen eine sichere Positionierung der Glasscheiben sicher. Darüber hinaus sind die Tragplatten auch so auszuführen, dass eine gleichmäßige Erwärmung der Glasplatten möglich ist.

Die Tragplatten sind aus einem hitzebeständigen Material gefertigt und können Keramik oder Metall umfassen. Bevorzugt bestehen die Tragplatten aus einer Keramik, besonders bevorzugt Cordierit, Mullit und/oder Quarz. Im Gegensatz zu Metallen haben keramische Materialien den Vorteil, dass diese eine vernachlässigbare thermische Ausdehnung aufweisen. Optional kann ein Trenngewebe, beispielsweise aus rostfreiem Stahl, zwischen Tragplatte und aufgelegten Glasscheiben vorgesehen sein. Wenn die Tragplatten aus Keramik gefertigt sind, kann jedoch, aufgrund der hohen chemischen Inertheit keramischer Materialien, in der Regel auf ein solches Trenngewebe verzichtet werden. Während sich bei Rollenöfen als Durchlauföfen die Glasscheiben relativ zu den Tragkörpern bewegen, werden sie im erfindungsgemäßen Verfahren auf eine Tragplatte aufgelegt, die als solche zusammen mit der Glasscheibe durch den Ofen hindurchtransportiert wird. Das ergibt zum einen den Vorteil, dass keine Oberflächenbeschädigungen der Glasscheiben durch Relativbewegung zu den Tragkörpern auftreten können.

In einer weiteren möglichen Ausführungsform weisen die Tragplatten jeweils einen starren Rahmen auf, der trommelfellartig mit einer hitzebeständigen Membran als Auflagefläche für die Aufnahmerahmen bespannt ist. Die Membranen der Tragplatten weisen eine infolge ihrer geringen Masse geringe Wärmekapazität und gute Wärmeleitfähigkeit auf. Die Membran ist dabei so ausgebildet, dass sie die Wärmezufuhr zur Unterseite der Glasscheibe nicht wesentlich beeinflusst. Somit erfolgt die Erwärmung der Glasscheiben auf beiden Seiten mit ungefähr der gleichen Aufheizgeschwindigkeit. Wenn die Wärmezufuhr auf beiden Seiten der Glasscheiben unterschiedlich ist, führt das zu einer unerwünschten Verformung der Glasscheiben, da die Glasscheiben sich auf derjenigen Seite, die sich schneller erwärmt, in der Fläche stärker ausdehnen als auf der anderen Seite.

Die Membran besteht bevorzugt aus einem hitzebeständigen Gewebe, wobei das hitzebeständige Gewebe besonders bevorzugt ein hitzebeständiges Metallfasergewebe ist. In einer möglichen Ausführungsform weist die Membran zwei Lagen auf, von denen die untere Lage aus einem Gewebe mit Kett- und Schussfäden besteht und mit einer verhältnismäßig hohen Spannung über den Tragrahmen spannbar ist, und die obere Lage aus einem Gewirk besteht, dessen Struktur sich der Oberfläche der darauf aufgelegten Glasscheiben anpasst.

Bevorzugt ist jede Membran-Tragplatte mit einer Spannvorrichtung versehen, durch die die Spannung der Membran einstellbar ist. Auf diese Weise kann die Spannung der Membran an das aufliegende Gewicht der Glasscheiben angepasst werden.

In der Regel wird auf Tragplatten aus keramischen Materialien zurückgegriffen, da diese wesentlich einfacher zu handhaben und kostengünstiger sind. Des Weiteren bieten Tragplatten aus Vollmaterial, wie Keramik, eine gute vollflächige Unterstützung der durch den Ofen transportierten Glasscheiben. Eine Einstellung der Membran entfällt dabei.

Die Abmessungen der Tragplatten sind in ihrer Dimensionierung der Anzahl und Größe der Glasscheiben anzupassen. Es hat sich als vorteilhaft erwiesen die Tragrahmen in einer im wesentlichen rechteckigen Grundform mit einer Kantenlänge von jeweils 100 cm bis 200 cm vorzusehen. Die Tragrahmen können dabei auch quadratisch ausgeformt sein. Beispielsweise weisen die Tragrahmen eine Größe von 150 cm x 150 cm, 150 cm x 200 cm, 200 cm x 200 cm oder auch zwischen diesen Abmessungen liegende Maße auf.

Das erfindungsgemäße Verfahren hat den weiteren wesentlichen Vorteil, dass der Vorgang der Übergabe der erhitzten Glasscheibe am Ende des Ofens auf eine nachgeschaltete Station im Produktionsprozess wesentlich vereinfacht wird. Während nämlich bei den gebräuchlichen Rollenöfen vor der Übergabe der heißen Glasscheibe eine genaue Positionierung der Glasscheibe erforderlich ist, das heißt eine Verschiebung der Glasscheibe in eine genau festgelegte Position oder eine Erfassung der gegebenen Position mit anschließender entsprechender Steuerung der Übergabewerkzeuge, so erübrigt sich dieser Verfahrensschritt bei dem erfindungsgemäßen Verfahren. Bei einem Transportsystem mit Tragplatten behält die Glasscheibe ihre relative Position zur jeweiligen Tragplatte innerhalb des Ofens unverändert bei. Die Tragplatten selbst lassen sich in einer Auflegestation am Eingang des Ofens und in einer Übergabestation am Ende des Ofens durch geeignete mechanische Mittel auf einfache Weise in eine genau bestimmte Position bringen, womit automatisch die Position der Glasscheibe selbst bestimmt ist. Man braucht also bei dem erfindungsgemäßen Verfahren lediglich beim Auflegen der Glasscheibe am Eingang des Ofens auf die jeweilige Tragplatte eine genaue Positionierung der Glasscheiben vorzunehmen, wodurch dann automatisch die Position der heißen Glasscheibe am Ende des Ofens gegeben ist. Auf diese Weise kann also der Vorgang des Positionierens, der sich für eine auf Verformungstemperatur befindende Glasscheibe verhältnismäßig schwierig gestaltet, in den Kaltbereich vor dem Ofen vorverlegt werden, was unter Produktionsbedingungen von wesentlichem Vorteil ist.

In einer bevorzugten Ausführungsform des Verfahrens sind die einzelnen Tragplatten in der Art eines Plattenbandförderers fest auf einer endlosen Förderkette montiert, die innerhalb des Durchlaufofens angeordnet ist. Dieser Plattenbandförderer mit einem Obertrum und einem Untertrum ist vollständig innerhalb des Ofens anzuordnen. Eine solche Ausführung des Ofens ist energetisch besonders wirtschaftlich. Stattdessen können die Tragplatten jedoch auch außerhalb des Ofens im Kreislauf zurückgeführt werden, wie es beispielsweise bei den sogenannten Skelett-Biegeöfen üblich ist. Die Tragplatten sind mit Tragschienen versehen, die seitlich durch Schlitze zwischen dem Oberteil und dem Unterteil des Ofens nach außen ragen und auf neben dem Ofen angeordneten Transportbändern aufliegen. Außerhalb des Ofens ist ein Transportsystem aus einem quer zur Längsachse des Ofens verfahrbaren Schlitten und parallel zum Ofen verlaufenden Transportbändern vorgesehen, das der Rückführung der Tragplatten zum kalten Ofenende dient.

Der Durchlaufofen kann nach im Stand der Technik bekannter Weise als horizontaler oder vertikaler Ofen ausgeführt sein. In einer bevorzugten Ausführungsform ist der Durchlaufofen als Ofen mit einer vertikalen Transportachse ausgeführt, wobei die Tragplatten entlang einer vertikalen Trajektorie verfahren werden um die Glasscheiben vom Ofeneingang zum anderen Ende des Ofens zu transportieren.

Die Glasscheiben werden bevorzugt durch horizontal verfahrbare Saugplatten auf die Tragplatten aufgelegt sowie nach Durchlaufen des Ofens über Saugplatten von den Tragplatten aufgenommen. Das Auflegen der Glasplatten im Kaltbereich kann auch mit anderen dem Fachmann bekannten Vorrichtungen erfolgen. Saugplatten zur Aufnahme von Glasscheiben sind dem Fachmann allgemein bekannt. Diese weisen in der Regel eine Grundplatte auf, die über ihre Fläche gleichmäßig mit Löchern versehen ist, durch die ein Vakuum angelegt werden kann. Bei kleinflächigen Glasscheiben tritt jedoch die Problematik auf, dass zu große freie Bereiche umliegend um die Glasscheiben verbleiben. In diesen Bereichen werden die Löcher der Saugplatte nicht abgedeckt, so dass hier permanent Luft eingezogen wird und ein ausreichendes Vakuum zum Abheben der Glasscheiben nicht erreicht wird. Die Erfindung schafft hier Abhilfe dadurch, dass die Verwendung von Tragplatten einen gleichzeitigen Transport mehrerer kleinflächiger Glasscheiben ermöglicht und so eine hohe Belegungsdichte der Saugplatte erreicht wird. Insbesondere werden auf der Saugplatte die bereits für die Tragplatten genannten Belegungsdichten erreicht. Darüber hinaus können die Löcher der Saugplatte auch selektiv nur in Bereichen vorgesehen werden, die in ihrer Kontur den aufzunehmenden Glasscheiben entsprechen, während außerhalb dieser Bereiche keine Löcher in der Saugplatte vorgesehen werden.

In einer bevorzugten Ausführungsform des Verfahrens wird nach Anheben der Glasscheiben durch eine Saugplatte benachbart zum Ofenausgang ein Vorspannrahmen in den Ofen eingefahren. Dieser Vorspannrahmen umfasst mehrere Aufnahmerahmen, die in ihrer Anzahl und Positionierung an die auf einer Tragplatte aufliegenden Glasscheiben anzupassen sind.

Auf einem Vorspannrahmen unmittelbar zueinander benachbarte Aufnahmerahmen weisen einen Abstand von 80 mm bis 250 mm, bevorzugt 100 mm bis 200 mm zueinander auf. Innerhalb dieser Bereiche lässt sich einerseits eine ausreichend dichte Belegung der Vorspannrahmen erzielen und zum anderen ein ausreichender Abstand bewerkstelligen um die Gläser passgenau aufzulegen. Der Abstand unmittelbar benachbarter Gläser beträgt dabei bevorzugt 100 mm bis 200 mm, besonders bevorzugt 150 mm bis 170 mm, insbesondere 160 mm.

Die Aufnahmerahmen des Vorspannrahmens sind als Metallrahmen ausgestaltet, die in ihrer umlaufenden Kontur der Randkontur der Glasscheiben entsprechen. Die Randbreite der Metallrahmen beträgt 20 mm bis 60 mm, bevorzugt 30 mm bis 50 mm, beispielsweise 40 mm. Die Glasscheiben liegen lediglich entlang ihrer umlaufenden Randkontur auf den Metallrahmen auf, wobei die innerhalb der Metallrahmen liegende Fläche der Glasscheiben freitragend ist. Bevorzugt liegen die Glasscheiben entlang ihrer umlaufenden Kontur lediglich in einer Breite von 5 mm bis 20 mm, besonders bevorzugt 10 mm auf. Dadurch ist ein Schwerkraftbiegen der Glasscheiben im Vorspannrahmen möglich, ohne dass die Durchsichtfläche der Glasscheiben in Kontakt zu Bauteilen der Anlage gelangt. Somit werden Beschädigungen im Sichtbereich der Glasscheiben vermieden. Darüber hinaus wird die Wärmezufuhr zur Unterseite der Glasscheiben nicht wesentlich beeinträchtigt, so dass die Erwärmung von beiden Seiten mit etwa der gleichen Aufheizgeschwindigkeit erfolgt.

In einer bevorzugten Ausführungsform des Verfahren zur Bearbeitung von Glasscheiben mit im Wesentlichen dreieckiger Kontur werden die Aufnahmerahmen mit alternierender Ausrichtung der dreieckigen Grundform ausgerichtet, so dass benachbarte Seitenkanten zweier zueinander unmittelbar benachbarter Scheiben im Wesentlichen parallel zueinander verlaufen. Der Abstand der Aufnahmerahmen kann so minimiert und die Belegungsdichte erhöht werden. Bei einem nicht geradlinigen Verlauf der Seitenkanten sind die Tangenten der Seitenkanten zu berücksichtigen.

Die Abmessungen des Vorspannrahmes sind im Wesentlichen der Größe der Glasscheiben anzupassen. Die Größe und Formgebung der Aufnahmerahmen ist durch die Größe und Form der Glasscheiben im Wesentlichen genau festgelegt und bestimmt wiederrum die Größe des Vorspannrahmens. Die Aufnahmerahmen sind austauschbar auf dem Vorspannrahmen montiert, so dass je nach den zu bearbeitenden Scheiben andere Aufnahmerahmen verwendet werden können, ohne dass eine Änderung des Vorspannrahmens erfolgen muss.

In einer bevorzugten Ausführungsform des erfindungsgemäßen Verfahrens werden die Glasscheiben nach Durchlaufen des Durchlaufofens im Vorspannrahmen durch Schwerkraftbiegen gebogen. In einer möglichen Ausführungsform wird der Vorgang des Schwerkraftbiegens durch weitere Maßnahmen unterstützt. Dabei ist die Saugplatte, die die Glasscheiben von den Tragplatten abnimmt als Formplatte ausgeführt. Die Formplatte weist mehrere spezifische Aufnahmen, auch als Oberstempel bezeichnet, auf, die in ihrer Anzahl und Form auf die zu biegenden Glasscheiben der Tragplatte abgestimmt sind. Darüber hinaus kann die Formplatte die Glasscheiben beim Ablegen in die Aufnahmerahmen des Vorspannrahmens in diese Aufnahmerahmen drücken. Dieses Nachdrücken erleichtert weiter die Formgebung.

Nach dem Biegen der Glasscheiben können diese optional vorgespannt werden, beispielsweise zur Verwendung als Einscheibensicherheitsglas. Alternativ kann auf ein Vorspannen der Glasscheiben ganz oder teilweise verzichtet werden. Die Glasscheiben können gegebenenfalls anschließend mit einer weiteren Glasscheibe über eine thermoplastische Zwischenschicht zu einer Verbundscheibe laminiert werden.

Die verschiedenen Ausgestaltungen der Erfindung können einzeln oder in beliebigen Kombinationen realisiert sein. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

Die Erfindung wird nun anhand von Ausführungsbeispielen näher erläutert, wobei Bezug auf die beigefügten Figuren genommen wird. Es zeigen in vereinfachter, nicht maßstäblicher Darstellung:
- Fig. 1: einen Ofen in seinem grundsätzlichen Aufbau in teilweise aufgebrochener perspektivischer Darstellung,
- Fig. 2: den Aufbau einer Tragplatte in perspektivischer Darstellung,
- Fig. 3: einen Vorspannrahmen mit Aufnahmerahmen in Draufsicht,
- Fig. 4: einen Ofen mit Rückführung der Tragplatten innerhalb des Ofens in einem Längsschnitt,
- Fig. 5: einen Ofen mit Rückführung der Tragplatten außerhalb des Ofens in perspektivischer Darstellung und
- Fig. 6: eine Schnittansicht eines Ofens dessen Längsachse vertikal ist.

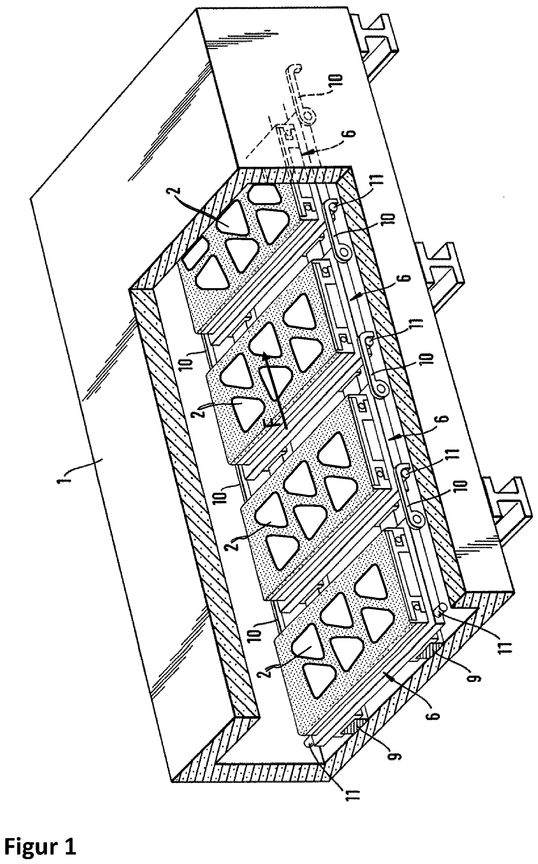

Wie aus Fig. 1 ersichtlich ist, ist ein Ofen grundsätzlich in Form eines Tunnelofens 1 ausgebildet, in dem die Glasscheiben 2 in horizontaler Lage in Richtung des Pfeiles F durch den Ofen gefördert und dabei auf ihre Biege- bzw. Vorspanntemperatur von etwa 650°C erwärmt werden. Zur Erwärmung dienen die üblichen elektrischen Heizeinrichtungen, die der besseren Übersicht wegen nicht dargestellt sind. Bei dem Tunnelofen 1 handelt es sich im Übrigen um einen zumindest weitgehend geschlossenen Ofen, der lediglich am Anfang und am Ende in seinen Stirnwänden Öffnungen zum Einbringen der kalten Glasscheiben und zum Herausholen der erwärmten Glasscheiben aufweist. Je nach der Konstruktion des Fördersystems kann der Ofen auch durchgehende Längsschlitze in den Seitenwänden aufweisen, in denen sich geeignete Kopplungsglieder bewegen, die zu einer außerhalb des Ofens angeordneten Antriebsvorrichtung führen. Das Fördersystem, mit dem die Glasscheiben durch den Ofen 1 hindurchtransportiert werden, umfasst eine Reihe von in Längsrichtung des Ofens hintereinander angeordneten Tragplatten 6, auf denen die ebenen Glasscheiben 2 liegen. Die Tragplatten 6 sind als keramische Tragplatten aus Quarz ausgestaltet. Die Tragplatten 6 sind auf geeignete Weise in Längsrichtung des Ofens verschiebbar gelagert, beispielsweise über nicht dargestellte Räder auf Schienen 9. Die jeweils benachbarten Tragplatten 6 sind über Riegel 10 miteinander verbunden. Die Riegel 10 sind an dem einen Ende der Tragplatte 6 verschwenkbar angeordnet und greifen über Zapfen 11 an dem gegenüberliegenden Ende der benachbarten Tragplatte, so dass die Tragplatten 6 nach Entnahme der Glasscheibe am Ende des Ofens zum Zweck der Rückführung durch Anheben der jeweils zusammengehörenden Riegel 10 entkoppelt werden können. Nachdem die Tragplatten 6 im Kreislauf zum Ofeneingang zurückgeführt wurden, werden sie erneut auf die Schienen 9 aufgesetzt und über die Riegel 10 mit der voraufgehenden Tragplatte 6 zusammengekoppelt.

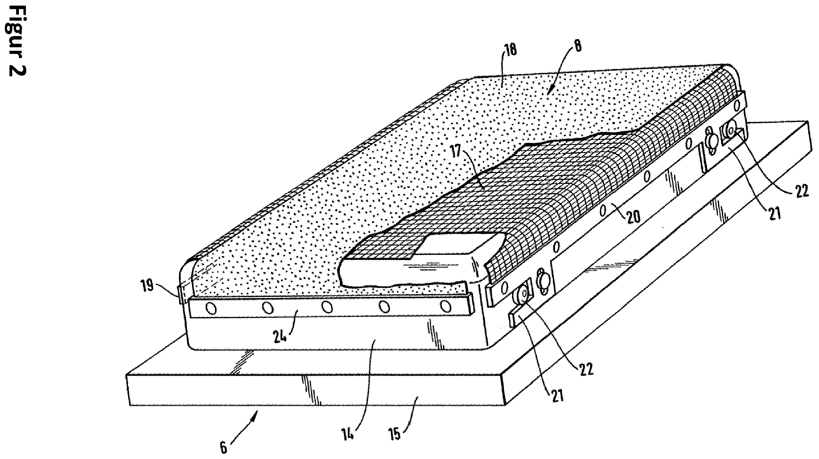

In Figur 2 ist eine Detailansicht einer Tragplatte 6 gezeigt, hier als Membran-Tragplatte. Wie aus Fig. 2 im Einzelnen zu ersehen ist, umfasst jede Membran-Tragplatte 6 einen beispielsweise rechteckigen Rahmen 14 aus Profilstäben oder Profilrohren. Der Rahmen 14 ist im dargestellten Fall auf einem Traggestell 15 angeordnet, das als solches mit geeigneten Mitteln für den Transport durch den Ofen versehen ist. Über den Rahmen 14 ist die Membran 8 aus einem hitzebeständigen Gewebe gespannt. Bei dem hitzebeständigen Gewebe kann es sich zum Beispiel um ein Gewebe aus Glasfasern handeln. Als besonders geeignet erwiesen haben sich für diesen Zweck Gewebestrukturen aus hitzebeständigen Metallfasern. Die Membran 8 soll unter einer solchen Spannung stehen, dass sie so weit wie möglich eine ebene Fläche bildet. Infolge der Wärmeausdehnung verliert die Membran 8 selbstverständlich an Spannung und senkt sich unter dem Einfluss des Gewichtes der Glasscheiben etwas durch. Besonders bewährt hat sich eine Membranstruktur aus zwei übereinander angeordneten Gewebelagen, nämlich einem unteren Gewebe 17 und einem oberen Gewebe oder Gewirk 18. Die untere Gewebelage 17 soll für die nötige Spannung der Membran sorgen, während die obere Gewebe- oder Gewirklage 18 nach den Gesichtspunkten einer optimalen Unterlage für die Auflagerahmen mit Glasscheiben ausgewählt wird. Das Gewebe 17 wird so angeordnet und gespannt, dass die Kettfäden in Richtung der die Spannung bewirkenden Kräfte verlaufen. Der Abschnitt des Gewebes 17 ist an dem einen Ende der Kettfäden mit Hilfe einer Leiste 19 auf der äußeren Seitenfläche des Rahmens 14 festgelegt. Am entgegengesetzten Ende ist mit dem Gewebeabschnitt 17 eine Metallleiste 20 fest verbunden. Die Metallleiste 20 ist mit hakenförmigen Spannansätzen 21 versehen. Die hakenförmigen Spannansätze 21 greifen hinter drehbare Zylinderscheiben 22, die an dem Rahmen 14 exzentrisch gelagert sind. Durch Drehen dieser exzentrisch gelagerten Zylinderscheiben 22 lässt sich das Gewebe 17 spannen. Für die obere Lage 18 wird vorzugsweise ein Gewirk verwendet, das als solches eine höhere Elastizität als das Gewebe 17 aufweist und dessen Feinstruktur sich infolgedessen den aufliegenden Teilen gut anpasst. Der rechteckige Gewirkabschnitt 18 ist wiederum entlang einer Seite mit Hilfe einer Metallleiste 24 auf dem Rahmen 14 festgelegt, während die gegenüberliegende Seite ähnlich wie der Gewebeabschnitt 17 mit einer Spannleiste versehen ist, mit der der Gewirkabschnitt 18 gespannt wird. Die Flächenabmessungen des Rahmens 14 und der Membran 8 sollen so gewählt sein, dass die Innenabmessungen des Rahmens 14 größer sind als die Flächenabmessungen der zu transportierenden Glasscheiben, so dass diese insgesamt auf dem frei gespannten Bereich der Membran 8 innerhalb des Rahmens 14 aufliegen. Eine solche Konstruktion kann unter den erwähnten Gesichtspunkten vorteilhaft sein. In der Regel werden jedoch die in Figur 1 beschriebenen Tragplatten aus keramischen Materialien verwendet.

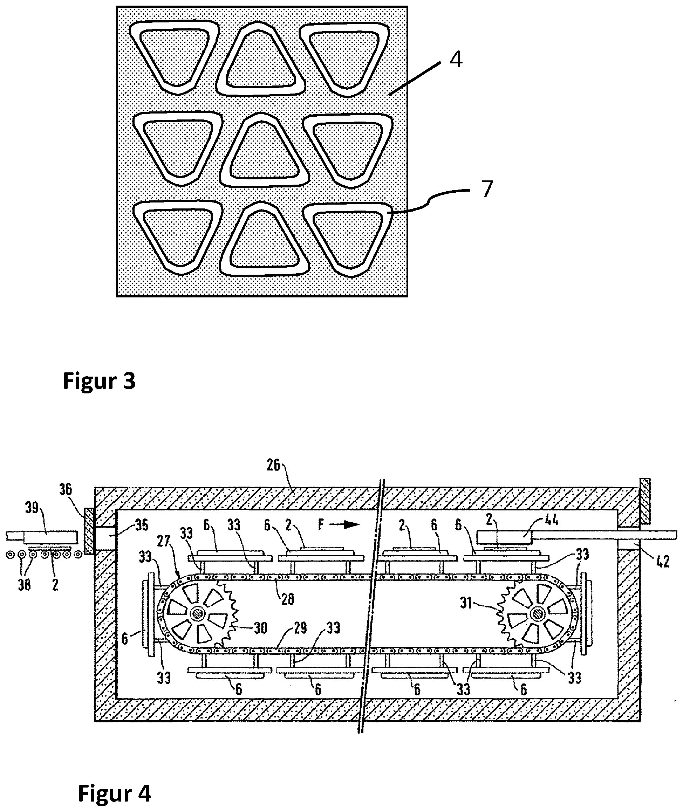

In Figur 3 ist eine Draufsicht auf einen Vorspannrahmen 4 mit neun Aufnahmerahmen 7 gezeigt. Die Aufnahmerahmen 7 sind zur Aufnahme von im Wesentlichen dreieckigen Scheiben mit abgerundeten Ecken vorgesehen. Die Aufnahmerahmen 7 sind in drei näherungsweise zueinander parallelen Reihen angeordnet, wobei innerhalb einer Reihe zueinander benachbarte Aufnahmerahmen 7 eine alternierende Ausrichtung besitzen. Dadurch wird eine hohe Belegungsdichte ermöglicht.

Da die Tragplatten 6 nach Entnahme der heißen Glasscheiben im Kreislauf zum kalten Ende des Ofens zurückgeführt werden müssen, ist hierfür ein entsprechendes Transportsystem erforderlich. Eine erste Ausführungsform eines Ofens mit einem hierfür geeigneten Transportsystem ist in Fig. 4 dargestellt. In diesem Fall ist die gesamte Transporteinrichtung innerhalb des Ofengehäuses 26 angeordnet. Die Transporteinrichtung besteht im Wesentlichen aus einem endlosen Kettenförderband 27 mit einem Obertrum 28 für den Transport der Glasscheiben in Richtung des Pfeiles F und einem Untertrum 29 für den Rücktransport der leeren Tragplatten 6. Das Kettenförderband 27 läuft über entsprechende Räder 30 und 31, von denen ein Rad über eine nach außen führende Antriebswelle von einem außerhalb des Ofengehäuses 26 angeordneten Antrieb in Drehung versetzt wird. Jede Tragplatte 6 ist über Stützen 33 auf dem Kettenförderband 27 befestigt. Am kalten Ende des Ofens werden die Tragplatten 6 durch die Öffnung 35 hindurch, die durch eine Tür 36 verschlossen werden kann, mit den Glasscheiben 2 beladen. Zu diesem Zweck werden die Glasscheiben 2, die beispielsweise auf einem Förderband 38 bis in die Nähe des Ofens transportiert werden, auf diesem Förderband 38 positioniert, das heißt in eine genau vorbestimmte Position gebracht. Mit Hilfe einer Saugplatte 39, die sich in einer definierten Position oberhalb der positionierten Glasscheiben 2 befindet, werden die Glasscheiben 2 von dem Förderband 38 abgehoben. Die Glasscheiben 2 werden dann nach Öffnen der Tür 36 um eine genau vorbestimmte Strecke in den Ofen transportiert und dort auf eine Tragplatte 6 abgelegt, die in dem Augenblick des Ablegens der Glasscheiben 2 eine genau definierte Position hat. In analoger Weise hierzu erfolgt die Entnahme der heißen Glasscheiben am Ende des Ofens durch die Öffnung 42 mit Hilfe der horizontal verschiebbaren Saugplatte 44. Durch die Verwendung von Tragplatten 6, haben die Glasscheiben 2 auch nach Durchlaufen des Ofens eine genau festgelegte Position, so dass diese positionsgenau über die Saugplatte 44 aufgenommen werden können. Nach Übernahme der heißen Glasscheibe 2 durch die Saugplatte 44 fährt diese in die benachbarte nicht dargestellte Biegestation und legt die Glasscheiben 2 auf eine untere Biegeform ab.

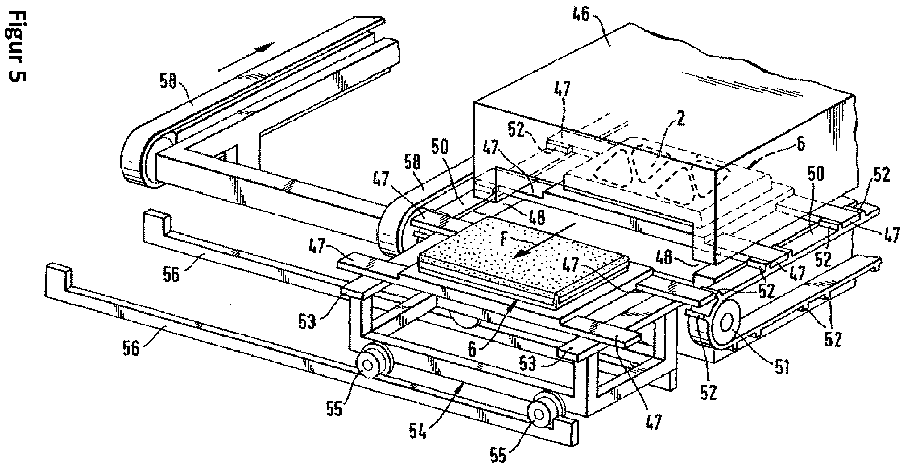

In Fig. 5 ist eine Ausführungsform eines Ofens mit einem anderen Transportsystem dargestellt, bei dem die Tragplatten 6 nach der Entnahme der Glasscheiben 2 außerhalb des Ofens 46 zum kalten Ende des Ofens zurückgeführt werden. In diesem Fall ruht die Tragplatte 6 auf zwei Tragschienen 47, die sich durch seitliche Schlitze 48 zwischen dem Unterteil und dem Oberteil des Ofens 46 hindurch bis außerhalb des Ofens erstrecken. Außerhalb des Ofens ruhen diese Tragschienen 47 auf schmalen Transportbändern 50, die als Endlosbänder ausgeführt sind und durch angetriebene Umlenkrollen 51 mit einer geregelten Geschwindigkeit angetrieben werden. Auf den Transportbändern 50 sind U-förmige Halteglieder 52 fest angeordnet, auf denen die Tragschienen 47 der Tragplatten 6 in einer jeweils festgelegten Position ruhen. Auch in diesem Fall ist wieder wichtig, dass die Glasscheiben 2 in der Beladestation in einer genau festgelegten Position zur Tragplatte 6 auf diese aufgelegt werden. In der Entnahmestation am heißen Ende des Ofens braucht dann die die Glasscheiben 2 übernehmende Saugplatte lediglich in Bezug auf die Tragplatte 6 positioniert zu werden, was jedoch beispielsweise durch eine mechanische Kopplung zwischen der Tragplatte und der Saugplatte im Augenblick der Übernahme der Glasscheiben leicht möglich ist.

Wenn die Glasscheiben 2 am heißen Ofenende von der Tragplatte 6 abgehoben worden sind, wird die Tragplatte 6 durch das Transportband 50 und anschließend durch eine andere, nicht dargestellte Einrichtung aus dem Ofen herausgeschoben, wobei die Tragschienen 47 auf starre Träger 53 eines Schlittens 54 aufgeschoben werden. Der Schlitten 54 ist über Räder 55 auf Schienen 56 quer zur Längsachse des Ofens 46 in zwei Endpositionen verfahrbar. Während der Schlitten 54 in der in der Zeichnung dargestellten Endposition die Tragplatte 6 von dem Ofen 46 übernimmt, wird die Tragplatte 6 in der anderen Endstellung des Schlittens 54 auf Transportbänder 58 übergeben, mit deren Hilfe die Tragplatte 6 wieder zum kalten Ofenende zurücktransportiert werden. Dort werden sie wiederum mit Hilfe eines dem beschriebenen Schlittensystem entsprechenden Quertransportsystems in eine Position gebracht, in der sie wiederum von den Transportbändern 50 übernommen und von neuem durch den Ofen 46 transportiert werden.

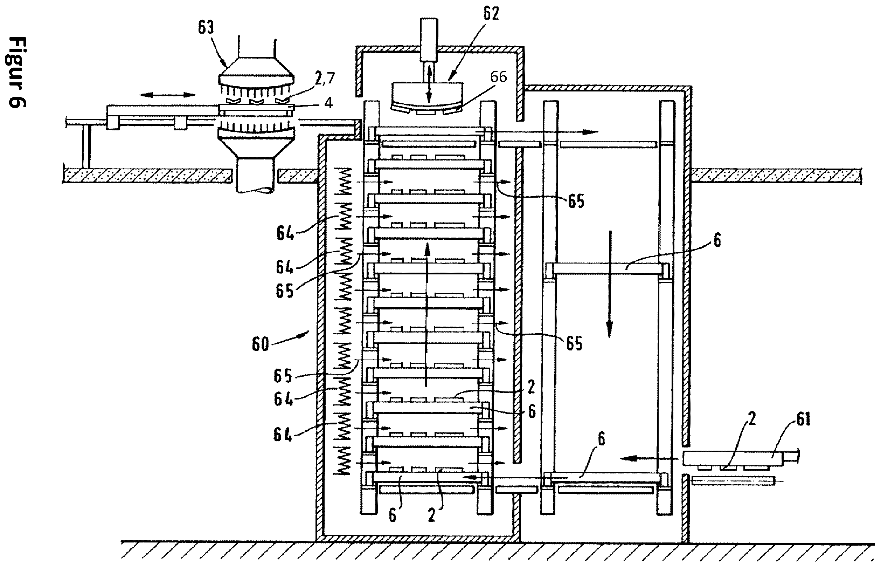

Fig. 6 zeigt eine Ausführungsform der Erfindung innerhalb eines Ofens 60, dessen Längsachse vertikal ist. Ein solcher Ofen kann verschiedene Vorteile haben. Zum einen ermöglicht er eine erhebliche Platzersparnis, zumindest in Bezug auf die Bodenfläche. Darüber hinaus ermöglicht er eine schnellere Erwärmung der Glasscheiben 2 aufgrund der stärkeren Erwärmung durch Konvektion bei diesem Ofentyp. Diese schnellere Erwärmung ist insbesondere bei dünnen Glasscheiben von Vorteil. Der Eintritt der kalten Glasscheiben 2 erfolgt mittels einer Saugplatte 61. Am Ausgang des Ofens werden die Glasscheiben 2 mittels einer Saugplatte 62 und eines Vorspannrahmens 4 zu einer Biege- und Temperstation 63 gebracht. Die Saugplatte 62 befindet sich innerhalb des Ofens 60 und ist als Formplatte mit Stempeln 66 ausgestaltet. Bei sehr kleinflächigen Glasscheiben kann es vorkommen, dass das Gewicht der Scheiben für ein alleiniges Schwerkraftbiegen nicht ausreicht. In diesem Fall kann die Saugplatte 62 als gefräste Form mit kompensierten Flächen ausgestaltet sein. Die Saugplatte 62 nimmt die Glasscheiben 2 von den Tragplatten 6 auf. Dabei werden die Glasscheiben 2 bereits durch die gebogene Form der Saugplatte 62 vorgeformt. Die Saugplatte 62 legt die Glasscheiben 2 in die Aufnahmerahmen 7 eines in den Ofen einfahrenden Vorspannrahmens 4 ein. Dabei können die Glasscheiben 2 optional mittels der Stempel 66 in die Aufnahmerahmen 7 eingedrückt werden. Dabei wird die Biegung der Glasscheiben vervollständigt. Je nach zu erreichender Biegung sowie Form und Größe der Glasscheiben 2 erfolgt wahlweise ein reines Schwerkraftbiegen der Scheiben in den Aufnahmerahmen 7 des Vorspannrahmens 4 oder der beschriebene Prozess zur Unterstützung des Biegevorgangs. Der Austritt der Glasscheiben 2 aus dem Ofen erfolgt wie bei den Tunnelöfen. Innerhalb des Ofens 60 folgen die Tragplatten 6 einer vertikalen Bewegung in Richtung des Pfeils F, das heißt nach oben. Nachdem die Glasscheiben 2 in Richtung der Biegestation 62 freigegeben worden sind, werden die Tragplatten 6 in eine Aufnahmeposition für kalte Glasscheiben zurückgebracht. Die Bewegung dieser Platten erfolgt dann in vertikaler Richtung nach unten. Vorrichtungen, die die Verschiebung der Tragplatten 6 in vertikaler Richtung ermöglichen, wobei diese eine horizontale Position beibehalten, sind analog zu den zuvor im Fall der horizontalen Verschiebungen durch die Tunnelöfen beschriebenen. Die Heizung kann ihrerseits durch elektrische Widerstandsheizungen 64 erzeugt werden, die vorteilhafterweise mit in den Figuren nicht gezeigten Blasvorrichtungen gekoppelt sind. Diese Vorrichtungen bewirken eine Luftzirkulation in den durch die Pfeile angegebenen Richtungen 65 und können dazu beitragen, die Heizrate noch weiter zu erhöhen. Gemäß einer anderen hier nicht dargestellten Variante kann die Ankunft der Glasscheiben 2 in der oberen Ebene und ihre Abfahrt in der unteren Ebene erfolgen. In einem solchen Fall erfolgt die Bewegung der Tragplatten während der Heizphase und damit derjenigen der Glasscheiben 2 in vertikaler Richtung nach unten, was die Erwärmung durch Konvektion weiter fördern kann.

### Bezugszeichenliste

- 1: Ofen
- 2: Glasscheiben
- 3: Biegeform
- 4: Vorspannrahmen
- 6: Tragplatten
- 8: Membran
- 7: Aufnahmerahmen
- 9: Schienen
- 10: Riegel
- 11: Zapfen
- 14: Rahmen
- 15: Traggestell
- 17: unteres Gewebe
- 18: obere Gewebe- oder Gewirklage
- 19: Leiste
- 20: Metallleiste
- 21: Spannansätzen
- 22: Zylinderscheiben
- 24: Metallleiste
- 26: Ofengehäuse
- 27: Kettenförderband
- 28: Obertrum
- 29: Untertrum
- 30, 31: Räder
- 33: Stützen
- 35: Öffnung
- 36: Tür
- 38: Förderband
- 39: Saugplatte
- 42: Öffnung
- 44: Saugplatte
- 46: Ofen
- 47: Tragschienen
- 48: Schlitze
- 50: Transportbänder
- 51: Umlenkrollen
- 52: Halteglieder
- 53: Träger
- 54: Schlitten
- 55: Räder
- 56: Schienen
- 58: Transportbänder
- 60: Ofen
- 61: Saugplatte
- 62: Saugplatte
- 63: Temperstation
- 64: Widerstandsheizungen
- 65: Richtungen der Luftzirkulation
- 66: Stempel

## Patentansprüche

1. Verfahren zum Erwärmen kleinflächiger Glasscheiben (2) in einem Durchlaufofen (1, 26, 46, 60) mit mehreren Tragplatten (6) mindestens umfassend die Schritte
a) Auflegen einer Lage kleinflächiger Glasscheiben (2) auf eine Tragplatte (6), wobei mindestens 6 Glasscheiben (2) pro Tragplatte aufgelegt werden,
b) Einfahren der Tragplatte (6) mit Glasscheiben (2) in einen Durchlaufofen (1, 26, 46, 60), wobei die Tragplatte (6) und die Glasscheiben (2) den Ofen (1, 26, 46, 60) gemeinsam durchfahren,
c) Erwärmen der Glasscheiben (2) auf ihre Biege- und/oder Vorspanntemperatur,
d) Abnehmen der Glasscheiben (2) von der Tragplatte (6) und Auflegen der Glasscheiben (2) auf einen Vorspannrahmen (4),
e) Ausfahren des Vorspannrahmens (4) mit Glasscheiben (2) aus dem Durchlaufofen (1, 26, 46, 60) und
f) Abkühlen der Glasscheiben (2).

2. Verfahren nach Anspruch 1, wobei die Glasscheiben (2) eine Größe von kleiner als 0,05 m², bevorzugt kleiner als 0,04 m², besitzen.

3. Verfahren nach Anspruch 1 oder 2, wobei die maximale Ausdehnung der Glasscheiben (2) entlang des Hauptbiegeradius vor und/oder nach Durchführung des Verfahrens 250 mm beträgt.

4. Verfahren nach einem der Ansprüche 1 bis 3, wobei jede Tragplatte (6) mit 8 bis 12, insbesondere 9 Glasscheiben (2) belegt wird.

5. Verfahren nach einem der Ansprüche 1 bis 4, wobei die Gesamtfläche der Glasscheiben (2) auf einer Tragplatte (6) zumindest 40 %, bevorzugt mindestens 50 %, insbesondere mindestens 70%, der Gesamtfläche der diese Glasscheiben (2) aufnehmenden Tragplatte (6) beträgt.

6. Verfahren nach einem der Ansprüche 1 bis 5, wobei die Tragplatten (6) ein keramisches Material, bevorzugt Quarz, Cordierit und/oder Mullit, umfassen.

7. Verfahren nach einem der Ansprüche 1 bis 6, wobei die Tragplatten (6) eine rechteckige Grundform mit einer Kantenlänge von jeweils 100 cm bis 200 cm aufweisen.

8. Verfahren nach einem der Ansprüche 1 bis 7, wobei die Glasscheiben (2) durch zumindest eine verfahrbare Saugplatte (44, 62) von den Tragplatten (6) abgenommen werden und auf einen Vorspannrahmen (4) umfassend mehrere Aufnahmerahmen (7) aufgelegt werden.

9. Verfahren nach Anspruch 8, wobei auf einem Vorspannrahmen (4) zueinander benachbarte Aufnahmerahmen (7) einen Abstand von 80 mm bis 250 mm, bevorzugt 100 mm bis 200 mm zueinander aufweisen.

10. Verfahren nach Anspruch 8 oder 9, wobei die Aufnahmerahmen (7) als Metallrahmen ausgestaltet sind und die Glasscheiben (2) lediglich entlang ihrer umlaufenden Randkontur auf den Metallrahmen aufliegen.

11. Verfahren nach einem der Ansprüche 8 bis 10, wobei für Glasscheiben (2) mit dreieckiger Kontur vorgesehene dreieckige Aufnahmerahmen (7) alternierend zueinander ausgerichtet sind.

12. Verfahren nach einem der Ansprüche 8 bis 11, wobei die Saugplatten (39, 44, 61) mit Löchern versehene Bereiche aufweisen, die in ihrer Kontur den aufzunehmenden Glasscheiben (2) entsprechen und lediglich innerhalb dieser Bereiche Löcher angebracht sind.

13. Verfahren nach einem der Ansprüche 1 bis 12, wobei die Glasscheiben (2) während der Schritte d) und e) und vor Schritt f) durch Schwerkraftbiegen gebogen werden.
